# EUROPEAN PATENT APPLICATION

(11) **EP 2 811 283 A1**
(43) Date of publication of application: **10.12.2014**
(21) Application number: 13743742.2
(22) Date of filing: 29.01.2013
(51) Int. Cl.: G01N 3/42

(54) **SAMPLE FIXING MEMBER FOR NANO INDENTER**

(30) Priority: 03.02.2012 JP 2012021713
(71) Applicant: Nitto Denko Corporation, Ibaraki-shi, Osaka 567-8680 (JP)
(72) Inventor: MAENO, Youhei, Ibaraki-shi Osaka 567-8680 (JP)
(74) Representative: Müller-Boré & Partner Patentanwälte PartG mbB
(86) International application number: PCT/JP2013/051806
(87) International publication number: WO 2013/115146

(57) **Abstract**

Provided is the following sample fixing member for a nano indenter. The member can stably fix a sample, theplasticdeformation of the member is alleviated, and the member enables accurate nano indenter measurement. A sample fixing member for a nano indenter of the present invention includes a fibrous columnar structure including a plurality of fibrous columnar objects each having a length of 200 µm or more.

## Description

### Technical Field

The present invention relates to a sample fixing member for a nano indenter, and more specifically, to a member for fixing a sample to be measured in a nano indenter.

### Background Art

A nano indenter has been known as means for accurately measuring the hardness of a thin film having a thickness of the order of nanometers (see, for example, Patent Literature 1). The nano indenter can measure the hardness of a sample by: indenting a diamond indenter into the sample while continuously increasing a load from 0; and measuring the indentation displacement amount of the indenter from the surface of the sample at the time.

In the nano indenter, the indentation displacement amount is a trace amount, specifically of the order of nanometers. Accordingly, when a fixing member for the sample undergoes a plastic deformation during the measurement with the nano indenter, the following problem arises. The height at which the sample is fixed is displaced and hence an accurate nano indenter measurement result is not obtained.

### Citation List

### Patent Literature

[PTL 1] JP 2008-215940

### Summary of Invention

### Technical Problem

An object of the present invention is to provide the following sample fixing member for a nano indenter. The member can stably fix a sample, the plastic deformation of the member is alleviated, and the member enables accurate nano indenter measurement.

### Solution to Problem

According to one embodiment of the present invention, there is provided a sample fixing member for a nano indenter, including a fibrous columnar structure including a plurality of fibrous columnar objects each having a length of 200 µm or more.

In a preferred embodiment, the sample fixing member for a nano indenter of the present invention has a shearing adhesive strength for a glass surface at room temperature of 10 N/cm² or more.

In a preferred embodiment, the fibrous columnar structure includes a carbon nanotube aggregate including a plurality of carbon nanotubes.

In a preferred embodiment, the carbon nanotubes each have a plurality of walls; a distribution width of a wall number distribution of the carbon nanotubes is 10 walls or more; and a relative frequency of a mode of the wall number distribution is 25% or less.

In a preferred embodiment, the carbon nanotubes each have a plurality of walls; a mode of a wall number distribution of the carbon nanotubes is present at a wall number of 10 or less; and a relative frequency of the mode is 30% or more.

In a preferred embodiment, the sample fixing member for a nano indenter of the present invention includes a base material.

### Advantageous Effects of Invention

According to one embodiment of the present invention, the following sample fixing member for a nano indenter can be provided. The member can stably fix a sample, the plastic deformation of the member is alleviated, and the member enables accurate nano indenter measurement.

### Brief Description of Drawings

FIG. 1 is a schematic sectional view of an example of a sample fixing member for a nano indenter in a preferred embodiment of the present invention.
FIG. 2 is a schematic sectional view of an apparatus for producing a carbon nanotube aggregate when the sample fixing member for a nano indenter in the preferred embodiment of the present invention includes the carbon nanotube aggregate.

### Description of Embodiments

### «Sample fixing member for nano indenter»

A sample fixing member for a nano indenter of the present invention includes a fibrous columnar structure including a plurality of fibrous columnar objects each having a length of 200 µm or more. When the sample fixing member for a nano indenter of the present invention includes the fibrous columnar structure including the plurality of fibrous columnar objects each having a length of 200 µm or more, the member can stably fix a sample, the plastic deformation of the member is alleviated, and the member enables accurate nano indenter measurement. The sample fixing member for a nano indenter of the present invention may be a member formed only of the fibrous columnar structure, or may be a member formed of the f ibrous columnar structure and any appropriate material that can be preferably used in the fixing of a sample for a nano indenter.

The sample fixing member for a nano indenter of the present invention is a member for bonding and fixing a measurement sample in a nano indenter, and its size and shape can be appropriately selected depending on the kind of the nano indenter to be used.

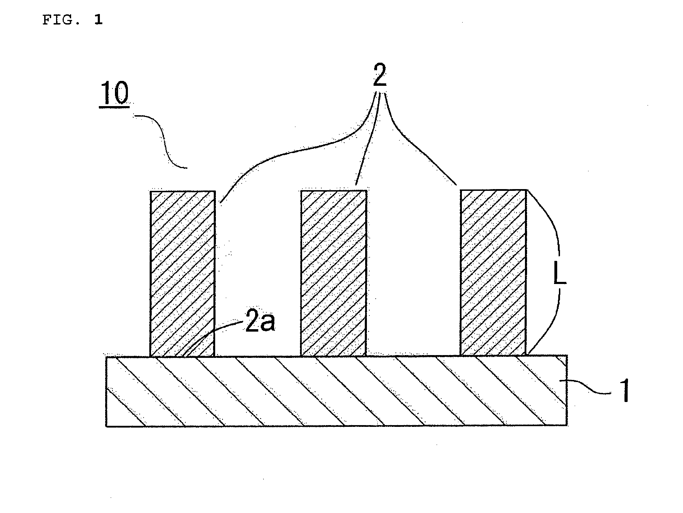

The fibrous columnar structure is an aggregate including a plurality of fibrous columnar objects. The fibrous columnar structure is preferably an aggregate including a plurality of fibrous columnar objects each having a length L. FIG. 1 illustrates a schematic sectional view of an example of a sample fixing member for a nano indenter in a preferred embodiment of the present invention.

In FIG. 1, a fibrous columnar structure 10 includes a base material 1 and a plurality of fibrous columnar objects 2. One end **2a** of each of the fibrous columnar objects 2 is fixed to the base material 1. The fibrous columnar objects 2 are each aligned in the direction of the length L. The fibrous columnar objects 2 are each preferably aligned in a direction substantially perpendicular to the base material 1. The term "direction substantially perpendicular" as used herein means that the angle of the object with respect to the surface of the base material 1 is preferably 90°±20°, more preferably 90°±15°, still more preferably 90°±10°, particularly preferably 90°±5° . It should be noted that unlike the illustrated example, the fibrous columnar structure 10 may be an aggregate formed only of the plurality of fibrous columnar objects 2. That is, the fibrous columnar structure 10 may not include the base material 1. In this case, the plurality of fibrous columnar obj ects 2 can exist together as an aggregate by virtue of, for example, a van der Waals force.

The length L is 200 µm or more, preferably from 200 µm to 2, 000 µm, more preferably from 300 µm to 1,500 µm, still more preferably from 400 µm to 1,000 µm, particularly preferably from 500 µm to 1,000 µm, most preferably from 600 µm to 1,000 µm. When the length L falls within the range, the sample fixing member for a nano indenter of the present invention can stably fix a sample, the plastic deformation of the member is alleviated, and the member enables accurate nano indenter measurement. It should be noted that the length L is measured by a method to be described later.

The sample fixing member for a nano indenter of the present invention has a shearing adhesive strength for a glass surface at room temperature of preferably 10 N/cm² or more, more preferably from 10 N/cm² to 200 N/cm², still more preferably from 15 N/cm² to 200 N/cm², particularly preferably from 20 N/cm² to 200 N/cm², most preferably from 25 N/cm² to 200 N/cm². When the shearing adhesive strength falls within the range, the sample fixing member for a nano indenter of the present invention can more stably fix a sample, and the member enables accurate nano indenter measurement. It should be noted that the shearing adhesive strength is measured by a method to be described later.

Any appropriate material may be adopted as a material for the fibrous columnar object. Examples thereof include: metals such as aluminum and iron; inorganic materials such as silicon; carbon materials such as a carbon nanofiber and a carbon nanotube; and high-modulus resins such as an engineering plastic and a super engineering plastic. Specific examples of the resin include polystyrene, polyethylene, polypropylene, polyethylene terephthalate, acetyl cellulose, polycarbonate, polyimide, and polyamide. Any appropriate physical property may be adopted as each physical property of the resin such as the molecular weight thereof as long as the object of the present invention can be attained.

Any appropriate base material may be adopted as the base material depending on purposes. Examples thereof include quartz glass, silicon (such as a silicon wafer), an engineering plastic, and a super engineering plastic. Specific examples of the engineering plastic and the super engineering plastic include polyimide, polyethylene, polyethylene terephthalate, acetyl cellulose, polycarbonate, polypropylene, and polyamide. Any appropriate physical property may be adopted as each physical property of the base material such as the molecular weight thereof as long as the object of the present invention can be attained.

The diameter of the fibrous columnar object is preferably from 0.3 nm to 2,000 nm, more preferably from 1 nm to 1,000 nm, still more preferably from 2 nm to 500 nm. When the diameter of the fibrous columnar object falls within the range, the sample fixing member for a nano indenter of the present invention can more stably fix a sample, the plastic deformation of the member is further alleviated, and the member enables more accurate nano indenter measurement.

The thickness of the base material may be set to any appropriate value depending on purposes.

The surface of the base material may be subjected to conventional surface treatment, e.g., chemical or physical treatment such as chromic acid treatment, exposure to ozone, exposure to a flame, exposure to a high-voltage electric shock, or ionizing radiation treatment, or coating treatment with an under coat (such as the above-mentioned adherent material) in order that adhesiveness with an adjacent layer, retentivity, or the like may be improved.

The base material may be a single layer, or may be a multilayer body.

In the present invention, the fibrous columnar structure is preferably a carbon nanotube aggregate including a plurality of carbon nanotubes. In this case, the fibrous columnar object is preferably a carbon nanotube.

The sample fixing member for a nano indenter of the present invention may be formed of only a carbon nanotube aggregate or may be formed of a carbon nanotube aggregate and any appropriate member.

When the sample fixing member for a nano indenter of the present invention includes a carbon nanotube aggregate including a plurality of carbon nanotubes and also includes the base material, one end of each of the carbon nanotubes may be fixed to the base material.

When the sample fixing member for a nano indenter of the present invention includes a carbon nanotube aggregate including a plurality of carbon nanotubes and includes a base material, any appropriate method may be adopted as a method of fixing the carbon nanotubes to the base material. For example, a substrate used in the production of the carbon nanotube aggregate may be directly used as a base material. Further, a base material having formed thereon an adhesion layer may be fixed to the carbon nanotubes. Further, when the base material is a thermosetting resin, the fixing may be performed by producing a thin film in a state before a reaction, and crimping one end of each of the carbon nanotubes to the thin film layer, followed by curing treatment. In addition, when the base material is a thermoplastic resin or a metal, the fixing may be performed by crimping one end of the fibrous columnar structure to the base material in a molten state, followed by cooling to room temperature.

### <<Carbon nanotube aggregate>>

When the sample fixing member for a nano indenter of the present invention includes a fibrous columnar structure, the fibrous columnar structure is preferably a carbon nanotube aggregate. When the sample fixing member for a nano indenter of the present invention includes a carbon nanotube aggregate, the sample fixing member for a nano indenter of the present invention can more stably fix a sample, the plastic deformation of the member is further alleviated, and the member enables more accurate nano indenter measurement.

### <First preferred embodiment>

A preferred embodiment (hereinafter sometimes referred to as "first preferred embodiment") of the carbon nanotube aggregate that may be included in the sample fixing member for a nano indenter of the present invention includes a plurality of carbon nanotubes, in which: the carbon nanotubes each have a plurality of walls; the distribution width of the wall number distribution of the carbon nanotubes is 10 walls or more; and the relative frequency of the mode of the wall number distribution is 25% or less.

The distribution width of the wall number distribution of the carbon nanotubes is 10 walls or more, preferably from 10 walls to 30 walls, more preferably from 10 walls to 25 walls, still more preferably from 10 walls to 20 walls.

The "distribution width" of the wall number distribution of the carbon nanotubes refers to a difference between the maximum wall number and minimum wall number in the wall numbers of the carbon nanotubes. When the distribution width of the wall number distribution of the carbon nanotubes falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The wall number and the wall number distribution of the carbon nanotubes may be measured with any appropriate device. The wall number and wall number distribution of the carbon nanotubes are preferably measured with a scanning electron microscope (SEM) or a transmission electron microscope (TEM). For example, at least 10, preferably 20 or more carbon nanotubes may be taken out from a carbon nanotube aggregate to evaluate the wall number and the wall number distribution by the measurement with the SEM or the TEM.

The maximum wall number of the carbon nanotubes is preferably from 5 to 30, more preferably from 10 to 30, still more preferably from 15 to 30, particularly preferably from 15 to 25.

The minimum wall number of the carbon nanotubes is preferably from 1 to 10, more preferably from 1 to 5.

When the maximum wall number and minimum wall number of the carbon nanotubes fall within the above-mentioned ranges, the carbon nanotubes can bring together additionally excellent mechanical properties and a high specific surface area, and moreover, the carbon nanotubes can provide a carbon nanotube aggregate exhibiting additionally excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The relative frequency of the mode of the wall number distribution is 25% or less, preferably from 1% to 25%, more preferably from 5% to 25%, still more preferably from 10% to 25%, particularly preferably from 15% to 25%. When the relative frequency of the mode of the wall number distribution falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The mode of the wall number distribution is present at a wall number of preferably from 2 to 10, more preferably from 3 to 10. When the mode of the wall number distribution falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

Regarding the shape of each of the carbon nanotubes, the lateral section of the carbon nanotube has only to have any appropriate shape. The lateral section is of, for example, a substantially circular shape, an oval shape, or an n-gonal shape (n represents an integer of 3 or more).

The carbon nanotubes each have a length of preferably 200 µm ormore, more preferably from 200 µm to 2,000 µm, still more preferably from 300 µm to 1,500 µm, even more preferably from 400 µm to 1,000 µm, particularly preferably from 500 µm to 1,000 µm, most preferably from 600 µm to 1, 000 µm. When the length of each of the carbonnanotubes falls within the range, the sample fixing member can fix a sample in an additionally stable manner, the plastic deformation of the member is additionally alleviated, and the member enables much more accurate nano indenter measurement.

The diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes falls within the range, the sample fixing member for a nano indenter of the present invention can fix a sample in an additionally stable manner, the plastic deformation of the member is additionally alleviated, and the member enables much more accurate nano indenter measurement.

The specific surface area and density of each of the carbon nanotubes may be set to any appropriate values.

### <Second preferred embodiment>

Another preferred embodiment (hereinafter sometimes referred to as " second preferred embodiment") of the carbon nanotube aggregate that may be included in the sample fixing member for a nano indenter of the present invention includes a plurality of carbon nanotubes, in which: the carbon nanotubes each have a plurality of walls; the mode of the wall number distribution of the carbon nanotubes is present at a wall number of 10 or less; and the relative frequency of the mode is 30% or more.

The distribution width of the wall number distribution of the carbon nanotubes is preferably 9 walls or less, more preferably from 1 walls to 9 walls, still more preferably from 2 walls to 8 walls, particularly preferably from 3 walls to 8 walls.

The "distribution width" of the wall number distribution of the carbon nanotubes refers to a difference between the maximum wall number and minimum wall number of the wall numbers of the carbon nanotubes. When the distribution width of the wall number distribution of the carbon nanotubes falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The wall number and wall number distribution of the carbon nanotubes may be measured with any appropriate device. The wall number and wall number distribution of the carbon nanotubes are preferably measured with a scanning electron microscope (SEM) or a transmission electron microscope (TEM). For example, at least 10, preferably 20 or more carbon nanotubes may be taken out from a carbon nanotube aggregate to evaluate the wall number and the wall number distribution by the measurement with the SEM or the TEM.

The maximum wall number of the carbon nanotubes is preferably from 1 to 20, more preferably from 2 to 15, still more preferably from 3 to 10.

The minimum wall number of the carbon nanotubes is preferably from 1 to 10, more preferably from 1 to 5.

When the maximum wall number and minimum wall number of the carbon nanotubes fall within the above-mentioned ranges, the carbon nanotubes can each bring together additionally excellent mechanical properties and a high specific surface area, and moreover, the carbon nanotubes can provide a carbon nanotube aggregate exhibiting additionally excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The relative frequency of the mode of the wall number distribution is 30% or more, preferably from 30% to 100%, more preferably from 30% to 90%, still more preferably from 30% to 80%, particularly preferably from 30% to 70%. When the relative frequency of the mode of the wall number distribution falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

The mode of the wall number distribution is present at a wall number of 10 or less, preferably from 1 to 10, more preferably from 2 to 8, still more preferably from 2 to 6. In the present invention, when the mode of the wall number distribution falls within the above-mentioned range, the carbon nanotubes can bring together excellent mechanical properties and a high specific surface area, and moreover, the carbon nanotubes can provide a carbon nanotube aggregate exhibiting excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

Regarding the shape of each of the carbon nanotubes, the lateral section of the carbon nanotube has only to have any appropriate shape. The lateral section is of, for example, a substantially circular shape, an oval shape, or an n-gonal shape (n represents an integer of 3 or more).

The carbon nanotubes each have a length of preferably 200 µm ormore, more preferably from 200 µm to 2, 000 µm, still more preferably from 300 µm to 1,500 µm, even more preferably from 400 µm to 1,000 µm, particularly preferably from 500 µm to 1,000 µm, most preferably from 600 µm to 1,000 µm. When the length of each of the carbon nanotubes falls within the range, the sample fixing member for a nano indenter of the present invention can fix a sample in an additionally stable manner, the plastic deformation of the member is additionally alleviated, and the member enables much more accurate nano indenter measurement.

The diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes falls within the range, the sample fixing member for a nano indenter of the present invention can fix a sample in an additionally stable manner, the plastic deformation of the member is additionally alleviated, and the member enables much more accurate nano indenter measurement.

The specific surface area and density of each of the carbon nanotubes may be set to any appropriate values.

### <<Method of producing carbon nanotube aggregate>>

Any appropriate method may be adopted as a method of producing the carbon nanotube aggregate that may be included in the sample fixing member for a nano indenter of the present invention.

The method of producing the carbon nanotube aggregate that may be included in the sample fixing member for a nano indenter of the present invention is, for example, a method of producing a carbon nanotube aggregate aligned substantially perpendicularly from a smooth substrate by chemical vapor deposition (CVD) involving forming a catalyst layer on the substrate and filling a carbon source in a state in which a catalyst is activated with heat, plasma, or the like to grow the carbon nanotubes. In this case, for example, the removal of the substrate provides a carbon nanotube aggregate aligned in a lengthwise direction.

Any appropriate substrate may be adopted as the substrate. The substrate is, for example, a material having smoothness and high-temperature heat resistance enough to resist the production of the carbon nanotubes. Examples of such material include quartz glass, silicon (such as a silicon wafer), and a metal plate made of, for example, aluminum. The substrate may be directly used as the substrate that may be included in the carbon nanotube aggregate that may be included in the sample fixing member for a nano indenter of the present invention.

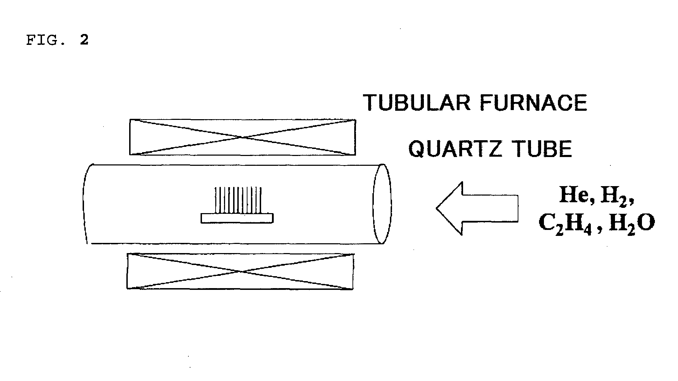

Any appropriate apparatus may be adopted as an apparatus for producing the carbon nanotube aggregate that may be included in the sample fixing member for a nano indenter of the present invention. The apparatus is, for example, a thermal CVD apparatus of a hot wall type formed by surrounding a cylindrical reaction vessel with a resistance heating electric tubular furnace as illustrated in FIG. 2. In this case, for example, a heat-resistant quartz tube is preferably used as the reaction vessel.

Any appropriate catalyst may be used as the catalyst (material for the catalyst layer) that may be used in the production of the carbon nanotube aggregate that may be included in the sample fixing member for a nano indenter of the present invention. Examples of the catalyst include metal catalysts such as iron, cobalt, nickel, gold, platinum, silver, and copper.

Upon production of the carbon nanotube aggregate that may be included in the sample fixing member for a nano indenter of the present invention, an alumina/hydrophilic film may be formed between the substrate and the catalyst layer as required.

Any appropriate method may be adopted as a method of producing the alumina/hydrophilic film. For example, the film may be obtained by producing an SiO₂ film on the substrate, depositing Al from the vapor, and increasing the temperature of Al to 450°C after the deposition to oxidize Al. According to such production method, Al₂O₃ interacts with the hydrophilic SiO₂ film, and hence an Al₂O₃ surface different from that obtained by directly depositing Al₂O₃ from the vapor in particle diameter is formed. When Al is deposited from the vapor, and then its temperature is increased to 450°C so that Al may be oxidized without the production of any hydrophilic film on the substrate, it may be difficult to form the Al₂O₃ surface having a different particle diameter. In addition, when the hydrophilic film is produced on the substrate and Al₂O₃ is directly deposited from the vapor, it may also be difficult to form the Al₂O₃ surface having a different particle diameter.

The catalyst layer that may be used in the production of the carbon nanotube aggregate that may be included in the sample fixing member for a nano indenter of the present invention has a thickness of preferably from 0.01 nm to 20 nm, more preferably from 0.1 nm to 10 nm in order that fine particles maybe formed. When the thickness of the catalyst layer that may be used in the production of the carbon nanotube aggregate that may be included in the sample fixing member for a nano indenter of the present invention falls within the above-mentioned range, the carbon nanotube aggregate can bring together excellent mechanical properties and a high specific surface area, and moreover, the carbon nanotube aggregate can exhibit excellent pressure-sensitive adhesive property. Accordingly, a sample fixing member for a nano indenter using such carbon nanotube aggregate can fix a sample in an additionally stable manner, the plastic deformation of the member is additionally alleviated, and the member enables much more accurate nano indenter measurement.

Any appropriate method may be adopted as a method of forming the catalyst layer. Examples of the method include a method involving depositing a metal catalyst from the vapor, for example, with an electron beam (EB) or by sputtering and a method involving applying a suspension of metal catalyst fine particles onto the substrate.

Any appropriate carbon source may be used as the carbon source that may be used in the production of the carbon nanotube aggregate that may be included in the sample fixing member for a nano indenter of the present invention. Examples thereof include: hydrocarbons such as methane, ethylene, acetylene, and benzene; and alcohols such as methanol and ethanol.

Any appropriate temperature may be adopted as a production temperature in the production of the carbon nanotube aggregate that may be included in the sample fixing member for a nano indenter of the present invention. For example, the temperature is preferably from 400°C to 1,000°C, more preferably from 500°C to 900°C, still more preferably from 600°C to 800°C in order that catalyst particles allowing sufficient expression of the effects of the present invention may be formed.

### Examples

Hereinafter, the present invention is described by way of Examples. However, the present invention is not limited thereto. It should be noted that various evaluations and measurements were performed by the following methods.

### <Measurement of length L of fibrous columnar object>

The length L of a fibrous columnar object was measured with a scanning electron microscope (SEM).

### <Measurement of shearing adhesive strength of sample fixing member for nano indenter>

A sample fixing member for a nano indenter cut into a unit area of 1 cm² was mounted on a glass (MATSUNAMI SLIDE GLASS measuring 27 mm by 56 mm) so that its tip (when the sample fixing member for a nano indenter included a carbon nanotube aggregate, the tip of a carbon nanotube) was in contact with the glass, and a 5-kg roller was reciprocated once to crimp the tip of the sample fixing member for a nano indenter onto the glass. After that, the resultant was left to stand for 30 minutes. A shearing test was performed with a tensile tester (Instron Tensile Tester) at a tension speed of 50 mm/min and room temperature (25°C), and the resultant peak was defined as a shearing adhesive strength.

### <Evaluation of wall number and wall number distribution of carbon nanotubes in carbon nanotube aggregate>

The wall numbers and the wall number distribution of carbon nanotubes in the carbon nanotube aggregate were measured with a scanning electron microscope (SEM) and/or a transmission electron microscope (TEM). At least 10, preferably 20 or more carbon nanotubes in the obtained carbon nanotube aggregate were observed with the SEM and/or the TEM to check the wall number of each carbon nanotube, and the wall number distribution was created.

### <Nano indenter measurement, and measurement and evaluation of displacement difference from calibration data with respect to load>

Nano indenter measurement was performed with a Berkovich triangular pyramid indenter.

A displacement difference with respect to a load in the nano indenter measurement was measured as described below.

First, the nano indenter measurement was performed by using molten quartz as a standard sample. Thus, calibration data was acquired. Next, the nano indenter measurement was performed while a measurement sample was fixed through a fixing member, and a displacement difference from the calibration data was calculated.

The evaluation of the displacement difference from the calibration data with respect to the load was performed by the following criteria.
○: The displacement difference from the calibration data with respect to the load is 3 nm or less.
×: The displacement difference from the calibration data with respect to the load is more than 3 nm.

It should be noted that the case where the sample could not be fixed owing to an insufficient adhesive strength upon performance of the nano indenter measurement was evaluated as "peeling."

### [Example 1]

An Al thin film (thickness: 10 nm) was formed on a silicon substrate (manufactured by KST, wafer with a thermal oxide film, thickness: 1,000 µm) with a vacuum deposition apparatus (JEE-4X Vacuum Evaporator manufactured by JEOL Ltd.). After that, the resultant was subjected to an oxidation treatment at 450°C for 1 hour. Thus, an Al₂O₃ film was formed on the silicon substrate. An Fe thin film (thickness: 2 nm) was further deposited from the vapor onto the Al₂O₃ film with a sputtering apparatus (RFS-200 manufactured by ULVAC, Inc.) to form a catalyst layer.

Next, the resultant silicon substrate with the catalyst layer was cut and mounted in a quartz tube having a diameter of 30 mm, and a helium/hydrogen (120/80 sccm) mixed gas whose moisture content had been held at 350 ppm was flowed into the quartz tube for 30 minutes to replace the inside of the tube. After that, a temperature in the tube was increased with an electric tubular furnace to 765°C in 35 minutes in a stepwise manner, and was stabilized at 765°C. While the temperature was held at 765°C, the inside of the tube was filled with a helium/hydrogen/ethylene (105/80/15 sccm, moisture content: 350 ppm) mixed gas, and the resultant was left to stand for 10 minutes to grow carbon nanotubes on the substrate. Thus, a carbon nanotube aggregate (1) in which the carbon nanotubes were aligned in their length directions was obtained.

The length of each of the carbon nanotubes of the carbon nanotube aggregate (1) was 200 µm.

In the wall number distribution of the carbon nanotubes of the carbon nanotube aggregate (1), the distribution width of the wall number distribution was 17 walls (4 walls to 20 walls), modes were present at 4 walls and 8 walls, and their relative frequencies were 20% and 20%, respectively.

The resultant carbon nanotube aggregate (1) was used as a sample fixing member (1) for a nano indenter and subjected to various evaluations. Table 1 summarizes the results.

### [Example 2]

An Al thin film (thickness: 10 nm) was formed on a silicon wafer (manufactured by Silicon Technology Co., Ltd.) as a substrate with a sputtering apparatus (RFS-200 manufactured by ULVAC, Inc.) . An Fe thin film (thickness: 1 nm) was further deposited from the vapor onto the Al thin film with the sputtering apparatus (RFS-200 manufactured by ULVAC, Inc.).

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 10 minutes to grow carbon nanotubes on the substrate. Thus, a carbon nanotube aggregate (2) in which the carbon nanotubes were aligned in their length direction was obtained.

The length of each of the carbon nanotubes of the carbon nanotube aggregate (2) was 200 µm.

In the wall number distribution of the carbon nanotubes of the carbon nanotube aggregate (2), a mode was present at 2 walls, and its relative frequency was 75%.

The obtained carbon nanotube aggregate (2) was used as a sample fixing member (2) for a nano indenter and subjected to various evaluations. Table 1 summarizes the results.

### [Example 3]

An Al thin film (thickness: 10 nm) was formed on a silicon substrate (manufactured by KST, wafer with a thermal oxide film, thickness: 1,000 µm) with a vacuum deposition apparatus (JEE-4X Vacuum Evaporator manufactured by JEOL Ltd.). After that, the resultant was subjected to an oxidation treatment at 450°C for 1 hour. Thus, an Al₂O₃ film was formed on the silicon substrate. An Fe thin film (thickness: 2 nm) was further deposited from the vapor onto the Al₂O₃ film with a sputtering apparatus (RFS-200 manufactured by ULVAC, Inc.) to form a catalyst layer.

Next, the resultant silicon substrate with the catalyst layer was cut and mounted in a quartz tube having a diameter of 30 mm, and a helium/hydrogen (120/80 sccm) mixed gas whose moisture content had been held at 350 ppm was flowed into the quartz tube for 30 minutes to replace the inside of the tube. After that, a temperature in the tube was increased with an electric tubular furnace to 765°C in 35 minutes in a stepwise manner, and was stabilized at 765°C. While the temperature was held at 765°C, the inside of the tube wasfilledwithahelium/hydrogen/ethylene (105/80/15 sccm, moisture content: 350 ppm) mixed gas, and the resultant was left to stand for 15 minutes to grow carbon nanotubes on the substrate. Thus, a carbon nanotube aggregate (3) in which the carbon nanotubes were aligned in their length directions was obtained.

The lengthof each of the carbon nanotubes of the carbon nanotubes aggregate (3) was 300 µm.

In the wall number distribution of the carbon nanotubes of the carbon nanotube aggregate (3), the distribution width of the wall number distribution was 17 walls (4 walls to 20 walls), modes were present at 4 walls and 8 walls, and their relative frequencies were 20% and 20%, respectively.

The resultant carbon nanotube aggregate (3) was used as a sample fixing member (3) for a nano indenter and subjected to various evaluations. Table 1 summarizes the results.

### [Example 4]

An Al thin film (thickness: 10 nm) was formed on a silicon wafer (manufactured by Silicon Technology Co. , Ltd.) as a substrate with a sputtering apparatus (RFS-200 manufactured by ULVAC, Inc.). An Fe thin film (thickness: 1 nm) was further deposited from the vapor onto the Al thin film with the sputtering apparatus (RFS-200 manufactured by ULVAC, Inc.).

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 30 minutes to grow carbon nanotubes on the substrate. Thus, a carbon nanotube aggregate (4) in which the carbon nanotubes were aligned in their length directions was obtained.

The length of each of the carbon nanotubes of the carbon nanotube aggregate (4) was 600 µm.

In the wall number distribution of the carbon nanotubes of the carbon nanotube aggregate (4), a mode was present at 2 walls, and its relative frequency was 75%.

The resultant carbon nanotube aggregate (4) was used as a sample fixing member (4) for a nano indenter and subjected to various evaluations. Table 1 summarizes the results.

### [Example 5]

An Al thin film (thickness: 10 nm) was formed on a silicon substrate (manufactured by KST, wafer with a thermal oxide film, thickness: 1,000 µm) with a vacuum deposition apparatus (JEE-4X Vacuum Evaporator manufactured by JEOL Ltd.). After that, the resultant was subjected to an oxidation treatment at 450°C for 1 hour. Thus, an Al₂O₃ film was formed on the silicon substrate. An Fe thin film (thickness: 2 nm) was further deposited from the vapor onto the Al₂O₃ film with a sputtering apparatus (RFS-200 manufactured by ULVAC, Inc.) to form a catalyst layer.

Next, the resultant silicon substrate with the catalyst layer was cut and mounted in a quartz tube having a diameter of 30 mm, and a helium/hydrogen (120/80 sccm) mixed gas whose moisture content had been held at 350 ppm was flowed into the quartz tube for 30 minutes to replace the inside of the tube. After that, a temperature in the tube was increased with an electric tubular furnace to 765°C in 35 minutes in a stepwise manner, and was stabilized at 765°C. While the temperature was held at 765°C, the inside of the tube was filled with a helium/hydrogen/ethylene (105/80/15 sccm, moisture content: 350 ppm) mixed gas, and the resultant was left to stand for 30 minutes to grow carbon nanotubes on the substrate. Thus, a carbon nanotube aggregate (5) in which the carbon nanotubes were aligned in their length directions was obtained.

The length of each of the carbon nanotubes of the carbon nanotube aggregate (5) was 600 µm.

In the wall number distribution of the carbon nanotubes of the carbon nanotube aggregate (5), the distribution width of the wall number distribution was 17 walls (4 walls to 20 walls), modes were present at 4 walls and 8 walls, and their relative frequencies were 20% and 20%, respectively.

The resultant carbon nanotube aggregate (5) was used as a sample fixing member (5) for a nano indenter and subjected to various evaluations. Table 1 summarizes the results.

### [Comparative Example 1]

An Al thin film (thickness: 10 nm) was formed on a silicon substrate (manufactured by KST, wafer with a thermal oxide film, thickness: 1,000 µm) with a vacuum deposition apparatus (JEE-4X Vacuum Evaporator manufactured by JEOL Ltd.). After that, the resultant was subjected to an oxidation treatment at 450°C for 1 hour. Thus, an Al₂O₃ film was formed on the silicon substrate. An Fe thin film (thickness: 2 nm) was further deposited from the vapor onto the Al₂O₃ film with a sputtering apparatus (RFS-200 manufactured by ULVAC, Inc.) to form a catalyst layer.

Next, the resultant silicon substrate with the catalyst layer was cut and mounted in a quartz tube having a diameter of 30 mm, and a helium/hydrogen (120/80 sccm) mixed gas whose moisture content had been held at 350 ppm was flowed into the quartz tube for 30 minutes to replace the inside of the tube. After that, a temperature in the tube was increased with an electric tubular furnace to 765°C in 35 minutes in a stepwise manner, and was stabilized at 765°C. While the temperature was held at 765°C, the inside of the tube was filled with a helium/hydrogen/ethylene (105/80/15 sccm, moisture content: 350 ppm) mixed gas, and the resultant was left to stand for 5 minutes to grow carbon nanotubes on the substrate. Thus, a carbon nanotube aggregate (C1) in which the carbon nanotubes were aligned in their length directions was obtained.

The length of each of the carbon nanotubes of the carbon nanotube aggregate (C1) was 90 µm.

In the wall number distribution of the carbon nanotubes of the carbon nanotube aggregate (C1), the distribution width of the wall number distribution was 17 walls (4 walls to 20 walls), modes were present at 4 walls and 8 walls, and their relative frequencies were 20% and 20%, respectively.

The resultant carbon nanotube aggregate (C1) was used as a sample fixing member (C1) for a nano indenter and subjected to various evaluations. Table 1 summarizes the results.

### [Comparative Example 2]

An Al thin film (thickness: 10 nm) was formed on a silicon wafer (manufactured by Silicon Technology Co. , Ltd.) as a substrate with a sputtering apparatus (RFS-200 manufactured by ULVAC, Inc.). An Fe thin film (thickness: 1 nm) was further deposited from the vapor onto the Al thin film with the sputtering apparatus (RFS-200 manufactured by ULVAC, Inc.).

After that, the substrate was mounted in a quartz tube having a diameter of 30 mm, and a helium/hydrogen (90/50 sccm) mixed gas whose moisture content had been held at 600 ppm was flowed into the quartz tube for 30 minutes to replace the inside of the tube. After that, a temperature in the tube was increased with an electric tubular furnace to 765°C and stabilized at 765°C. While the temperature was held at 765°C, the inside of the tube was filled with a helium/hydrogen/ethylene (85/50/5 sccm, moisture content: 600 ppm) mixed gas, and the resultant was left to stand for 6 minutes to grow carbon nanotubes on the substrate. Thus, a carbon nanotube aggregate (C2) in which the carbon nanotubes were aligned in their length direction was obtained.

The length of each of the carbon nanotubes of the carbon nanotube aggregate (C2) was 120 µm.

In the wall number distribution of the carbon nanotubes of carbon nanotube aggregate (C2), a mode was present at 2 walls, and its relative frequency was 75%.

The obtained carbon nanotube aggregate (C2) was used as a sample fixing member (C2) for a nano indenter and subjected to various evaluations. Table 1 summarizes the results.

### [Comparative Example 3]

A conductive carbon double-sided tape (731: manufactured by Nisshin EM Corporation) was used as a sample fixing member for a nano indenter and subjected to various evaluations. Table 1 summarizes the results.

**[Table 1]**

| | Thickness (length) of fixing member (µm) | Shearing adhesive strength (N/cm²) | Displacement difference from calibration data with respect to load at the time of nano indenter measurement (nm) | Evaluation of displacement difference from calibration data with respect to load |
|---|---|---|---|---|
| Example 1 | 200 | 10.9 | 1.0 | ○ |
| Example 2 | 200 | 11.3 | 1.1 | ○ |
| Example 3 | 300 | 17.2 | 1.3 | ○ |
| Example 4 | 600 | 30.8 | 0.7 | ○ |
| Example 5 | 600 | 44.5 | 0.6 | ○ |
| Comparative Example 1 | 90 | 5.9 | Peeling | - |
| Comparative Example 2 | 120 | 4.1 | Peeling | - |
| Comparative Example 3 | 90 | 140 | 12.0 | × |

### Industrial Applicability

The sample fixing member for a nano indenter of the present invention can be suitably used as a member for fixing a sample to be measured in a nano indenter.

### Reference Signs List

**10** fibrous columnar structure
**1** base material
**2** fibrous columnar object
**2a** one end of fibrous columnar object

## Claims

1. A sample fixing member for anano indenter, comprising a fibrous columnar structure including a plurality of fibrous columnar obj ects each having a length of 200 µm or more.

2. A sample fixing member for a nano indenter according to claim 1, wherein the sample fixing member has a shearing adhesive strength for a glass surface at room temperature of 10 N/cm² or more.

3. A sample fixing member for a nano indenter according to claim 1 or 2, wherein the fibrous columnar structure comprises a carbon nanotube aggregate including a plurality of carbon nanotubes.

4. A sample fixing member for a nano indenter according to claim 3, wherein:
the carbon nanotubes each have a plurality of walls;
a distribution width of a wall number distribution of the carbon nanotubes is 10 walls or more; and
a relative frequency of a mode of the wall number distribution is 25% or less.

5. A sample fixing member for a nano indenter according to claim 3, wherein:
the carbon nanotubes each have a plurality of walls;
a mode of a wall number distribution of the carbon nanotubes is present at a wall number of 10 or less; and
a relative frequency of the mode is 30% or more.

6. A sample fixing member for a nano indenter according to any one of claims 1 to 5, wherein the sample fixing member comprises a base material.
